## Europäisches Patentamt
## European Patent Office
## Office européen des brevets

(19)

(11) Numéro de publication: **0 019 967**
**B1**

(12)

# FASCICULE DE BREVET EUROPEEN

(45) Date de publication du fascicule du brevet: **18.07.84**

(51) Int. Cl.³: **B 65 G 67/24, B 65 G 65/42**

(21) Numéro de dépôt: **80200454.9**

(22) Date de dépôt: **14.05.80**

(54) Installation de déchargement de wagons-trémies et similaires.

(30) Priorité: **22.05.79 BE 57811**

(43) Date de publication de la demande:
**10.12.80 Bulletin 80/25**

(45) Mention de la délivrance du brevet:
**18.07.84 Bulletin 84/29**

(84) Etats contractants désignés:
**AT CH DE FR GB IT LI LU NL SE**

(56) Documents cités:
**CH - A - 593 847**
**DE - A - 2 120 822**
**DE - A - 2 137 079**
**DE - A - 2 452 057**
**DE - B - 1 197 808**
**DE - C - 373 184**
**DE - C - 393 227**
**DE - C - 631 332**
**DE - U - 1 981 790**
**FR - A - 1 097 637**

(73) Titulaire: **Belotti, Pierre**
**Profond Chemin 55**
**B-7860 Lessines (BE)**

(72) Inventeur: **Firket, Jean-Oscar**
**Berkendallaan 148**
**B-1800 Vilvoorde (BE)**

(74) Mandataire: **Bockstael, Daniel**
**M.F.J. Bockstael Arenbergstraat 13**
**B-2000 Anvers (BE)**

Courier Press, Leamington Spa, England.

## Description

La présente demande concerne une installation de déchargement de wagons-trémies et similaires, généralement située au-dessous d'une voie de chemin de fer et comprenant une trémie; dans le fond de la trémie, une bande transporteuse lisse, et des déflecteurs obliques par rapport à la direction de déplacement de ladite bande.

Ainsi, le brevet allemand DE—C—393.227 décrit une trémie dont la sortie est pourvue d'une grille constituée par des déflecteurs inclinés vers le bas d'amont en aval par rapport au sens de progression d'une courroie transporteuse sous-jacente. L'entièreté de la trémie étant libre, la masse entière de son contenu repose sur ladite grille. Il s'ensuit que, dans ce dispositif connu, rien n'empêche la formation de ponts de matière dans la trémie ni des colmatages fréquents de la grille. En outre, les bords inférieures desdits déflecteurs étant coplanaires, il y a certitude de bourrage entre ces bords et ladite courroie, particulièrement si la matière dans la trémie est du charbon.

Pour éviter le bourrage, le brevet suisse CH—593.847 préconise, d'équiper la base ouverte d'un silo, située au-dessus d'une courroie transporteuse, d'une série de chicanes verticales dont les bords inférieurs sont situés à des distances de la courroie allant croissant dans le sens de la progression de cette dernière. Ici également, rien ne s'oppose à la formation de ponts de matière dans le silo.

En outre, la disposition verticale desdits chicanes favorise le pontage entre celles-ci tandis qu'elle permet au poids entier du contenu du silo de reposer su la courroie dont l'entraînement nécessitera dès lors une puissance importante.

Le but de l'invention est de palier les inconvénients susmentionnés.

A cet effet, l'invention consiste en une installation de déchargement de wagons-trémies et similaires située au-dessous d'une voie de chemin de fer, dans une fosse, et comprenant une trémie sous l'ouverture de laquelle est disposé le brin supérieur d'une courroie transporteuse sans fin, des déflecteurs inclinés vers le bas d'amont en aval par rapport au sens de progression dudit brin supérieur étant prévus dans l'ouverture de ladite trémie, caractérisée en ce que lesdits déflecteurs se prolongent dans la trémie proprement dite, jusqu'au moins à mi-hauteur de cette dernière, tandis que la distance entre les bords inférieurs desdits déflecteurs et ledit brin supérieur de la courroie va croissant, d'amont en aval par rapport au sens de déplacement dudit brin, de façon connue en soi.

Afin de mieux faire comprendre l'objet de la présente invention, celle-ci sera décrite plus en détail ci-dessous à l'aide d'un exemple de réalisation pratique, non-limitatif, représenté dans les dessins annexés, dans lesquels:

la figure 1 représente, en vue latérale et partiellement en coupe, l'ensemble d'une installation suivant l'invention;

la figure 2 représente une vue selon la coupe II—II dans la figure 1; et

la figure 3 représente une vue selon la coupe III—III dans la figure 2.

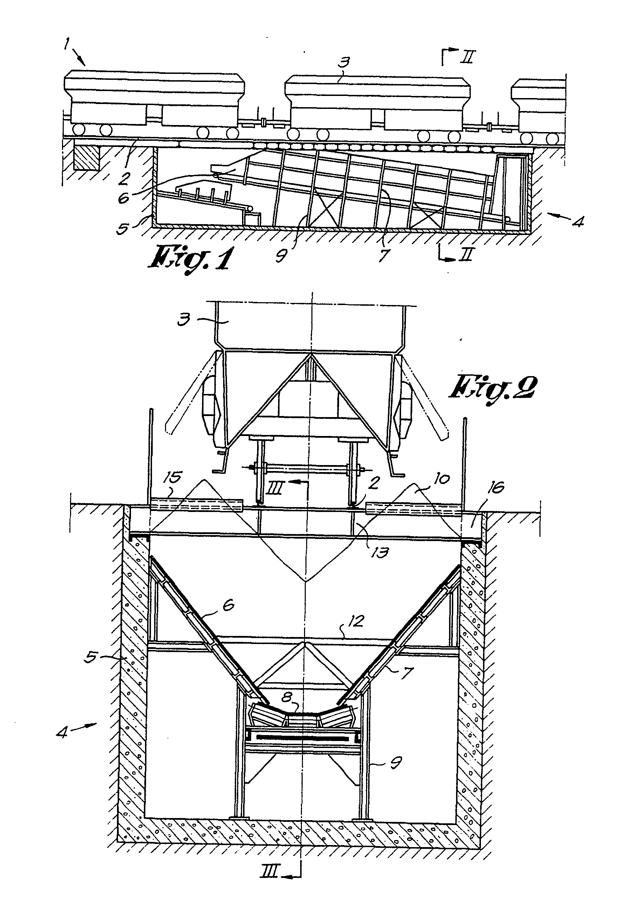

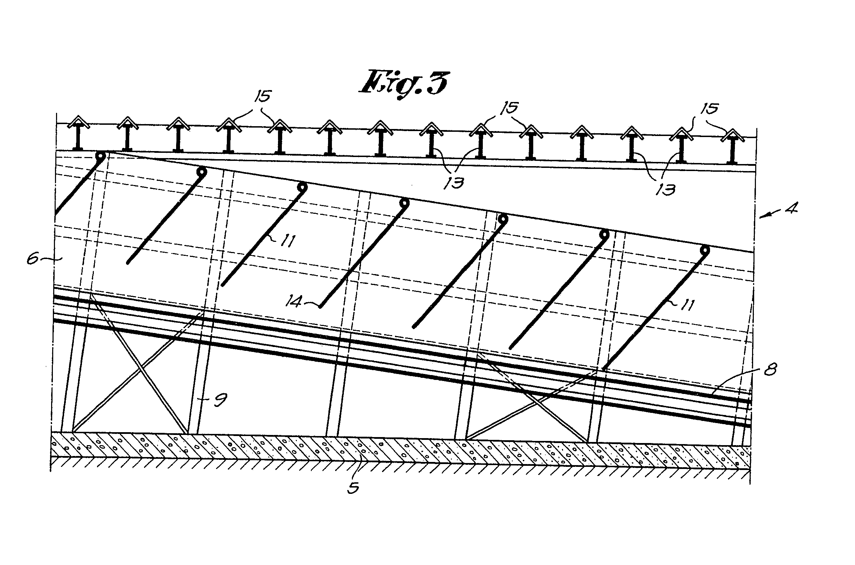

La figure 1 représente une partie d'une rame de wagons-trémies 1, arrêtée sur la voie de chemin de fer 2, le wagon-trémie 3 se trouvant à la hauteur de l'installation de déchargement 4.

Cette installation comporte une fosse 5 généralement réalisée en béton armé, une trémie 6 supportée par une armature de poutres 7 fixée aux parois de la fosse 5 et une bande transporteuse lisse 8 dans la fond de ladite trémie 6 et porté par une armature de poutres 9, relié à l'armature 7 et prenant appui sur le sol de la fosse 5.

L'inclinaison des parois de la trémie 6 correspond substantiellement au talus naturel du matériau déversé 10 et est de l'ordre de 50° pour le charbon.

Des déflecteurs 11, supportés par des armatures 12 et reliés à l'armature 7, sont prévus perpendiculairement aux parois intérieures de la trémie 6 et en oblique par rapport à la direction de déplacement de la bande 8, leur inclinaison correspondant également au talus naturel du matériaur déversé 10. Ces déflecteurs 11 sont mutuellement parallèles et sont espacés l'un de l'autre d'une distance correspondant substantiellement au double de la distance entre deux traverses adjacentes 13 de la voie 2.

La distance entre les extrémités inférieures 14 des déflecteurs 11 et la bande 8, vue dans le sens du déplacement de ladite bande 8, va en croissant afin d'obtenir une couche de charbon régulièrement laminée sur la bande 8.

Les parois de la trémie 6 et les déflecteurs 11 sont, de préférence, réalisés en acier inoxydable.

Afin d'éviter que, lors du déchargement du wagon-trémie 3, les traverses 13 soient recouvertes de charbon, ces dernières sont pourvues sur une partie au moins de leur longueur, d'une coiffe 15 en forme de dièdre.

Selon l'invention les extrémités 16 des traverses 13 sont solidarisées à l'armature des parois de la fosse 5.

L'installation décrite ci-dessus en tant qu'exemple de réalisation pratique de la présente invention permet d'extraire le charbon de la fosse de façon continue et régulière, même pendant le déchargement des wagons 3. La disposition et l'inclinason des parois de la trémie 6 et des déflecteurs 11, par rapport à la bande transporteuse 8, permettent d'amener le charbon vers ladite bande 8 d'une manière régulière et sans la formation de ponts.

Etant donné que la pression du charbon 10 est en grande partie supportée par les déflecteurs obliques 11, la pression et la friction sur la bande 8 seront minimales et, dès lors, la puissance pour son entraînement ne doit pas être très élevée. La profondeur de la fosse 5 peut être réduite considérablement par rapport à l'état de la technique, puisque la bande 8, ne prend que peu de place et que l'extraction du charbon se fait de manière régulière et continue, le charbon ne davant pas être accumulé dans la fosse. La réduction des dimensions de la cave résout également le problème d'eau et a une répercussion favorable sur le prix de revient de l'installation.

Il est évident que l'installation selon l'invention peut également être utilisée pour le déchargement d'autres matériaux, par exemple du sable, du gravier, etc., l'inclinaison des parois de la trémie et des déflecteurs étant choisie en fonction du talus naturel des matériaux déchargès en l'occurrence.

## Revendications

1. Installation de déchargement de wagons-trémies et similaires située au-dessous d'une voie de chemin de fer, dans une fosse, et comprenant une trémie sous l'ouverture de laquelle est disposée le brin supérieur d'une courroie transporteuse sans fin, des déflecteurs inclinés vers le bas d'amont en aval par rapport au sens de progression dudit brin supérieur étant prévus dans l'ouverture de ladite trémie, caractérisé en ce que ledits déflecteurs (11) se prolongent dans la trémie (6) proprement dite, jusqu'au moins à mi-hauteur de cette dernière, tandis que la distance entre les bords inférieurs (14) desdits déflecteurs (11) et ledit brin supérieur de la courroie (8) va croissant, d'amont en aval par rapport au sens de déplacement dudit brin, de façon connue en soi.

2. Installation selon la revendication 1, caractérisée en ce que les parois de la trémie (6) ainsi que les déflecteurs (11) sont réalisés en acier inoxydable.

3. Installation selon la revendication 1, caractérisée en ce que les traverses (13) de ladite voie de chemin de fer sont pourvues, sur une partie au moins de leur longueur, d'une coiffe (15) en forme de dièdre.

4. Installation selon la revendication 1, caractérisée en ce que les bords inférieurs des parois longitudinales de la trémie (6) ainsi que ladite courroie (8) sont inclinés sur l'horizontale, du bas vers le haut, d'amont en aval par rapport au sens de progression du brin supérieur de la courroie (8).

## Patentansprüche

1. Entladeanlage von Selbstentladewagen und dgl. etwa über einem Eisenbahngleis oder in einem Graben angeordnet ist und einen Trichter umfasst, unter dessen Öffnung der obere Trum eines endlosen Förderbandes angeordnet ist, wobei in der Öffnung des Trichters zur Erde neigende Ablenkplatten von stromauf nach stromab in bezug auf die Bewegungsrichtung des oberen Trums angeordnet sind, dadurch gekennzeichnet, dass sich die Ablenkplatten (11) in dem Trichter (6) selber bis mindestens der halben Höhe des letzteren verlängern, während der Abstand zwischen den unteren Rändern (14) der Ablenkplatten (11) und dem oberen Trum des Bandes (8) auf bekannte Weise von stromauf nach stromab in bezug auf die Bewegungsrichtung des oberen Trums zunimmt.

2. Anlage nach Anspruch 1, dadurch gekennzeichnet, dass die Wände des Trichters (6) sowie die ablenkplatten (11) aus rostfreiem Stahl hergestellt sind.

3. Anlage nach Anspruch 1, dadurch gekennzeichnet, dass die Suerbalken (13) diese Eisenbahngleises wenigstens über einen Teil deren Länge mit einer diederförmigen Haube (15) versehen sind.

4. Anlage nach Anspruch 1, dadurch gekennzeichnet, dass die unteren Ränder der Längswände des Trichters (6) sowie das Band (8) von unten nach oben und von stromauf nach stromab in bezug auf die Bewegungsrichtung des oberen Trums (8) zur Erde neigen.

## Claims

1. Discharging installation for hopper wagons and the like situated beneath a railway track, in a trench, and comprising a hopper under the opening of which the upper part of an endless conveyor belt is situated, deflectors inclined downwards from the upstream to the downstream side in respect to the direction of movement of said upper part provided in the opening of the said trench, characterized thereby that the said deflectors (11) are extending in the trench (6), at least to halfway the height of the latter, whereas the distance between the bottom edges (14) of the said deflectors (11) and the said upper part of the belt (8) increases from top to bottom with respect to the direction of movement of the said belt, in the way known as such.

2. Installation according to claim 1, characterized thereby that the walls of the trench (6), as well as the deflectors (11), are made of stainless steel.

3. Installation according to claim 1, characterized thereby that the cross girders (13) of the said railway track are provided, at least over part of their length, with a cap (15) in the shape of a dihedral angle.

4. Installation according to claim 1, characterized thereby that the bottom edges of the longitudinal walls of the trench (6) as well as the said belt (8), are inclined with respect to the horizontal from bottom to top, from upstream to downstream with respect to the direction of movement of the upper part of the conveyor belt (8).

0 019 967

Fig.1

Fig.2

Fig.3

2